# EUROPEAN PATENT APPLICATION

(11) **EP 4 756 575 A1**
(43) Date of publication of application: **10.06.2026**
(21) Application number: 24865729.8
(22) Date of filing: 28.08.2024
(51) Int. Cl.: G06F 1/3287, G06F 1/26

(54) **INPUT/OUTPUT DEVICE AND OPERATION METHOD THEREFOR**

(30) Priority: 11.09.2023 KR 20230120175
(71) Applicant: LG Energy Solution, Ltd., Seoul 07335 (KR)
(72) Inventor: LEE, Ye Seul, Daejeon 34122 (KR); YANG, Seong Yeol, Daejeon 34122 (KR)
(74) Representative: Plasseraud IP
(86) International application number: PCT/KR2024/012871
(87) International publication number: WO 2025/058288

(57) **Abstract**

An input/output device according to an embodiment disclosed in this document includes a plurality of input/output ports respectively connected to a plurality of electronic devices; and a processor configured to control supply of power needed for operation of the plurality of electronic devices, and the processor may control electrical connections between the plurality of input/output ports so that power provided from a first electronic device connected to a first input/output port among the plurality of input/output ports is supplied to a second electronic device connected to a second input/output port.

## Description

### TECHNICAL FIELD

### CROSS-REFERENCE TO RELATED APPLICATION

This application claims priority to and the benefit of Korean Patent Application No. 10-2023-0120175 filed in the Korean Intellectual Property Office on September 11, 2023, the entire contents of which are incorporated herein by reference.

### TECHNICAL FIELD

Embodiments disclosed herein relate to an input/output device and its operating method.

### BACKGROUND ART

An input/output device is a device that controls the input and output of data or the like. The input/output device may receive data from various electronic devices connected to the input/output device through input/output ports, or provide data stored in the input/output device to the electronic devices. In addition, the input/output device supplies power needed for operation to the connected electronic devices so that the electronic devices may operate.

However, a situation may occur, in which the power needed for the electronic devices to operate may not be supplied sufficiently as the power supplied by the input/output device is insufficient. When the power supplied by the input/output device is insufficient for the operation of the electronic devices, the electronic devices may be connected to a plurality of input/output ports and receive power from the input/output device. This may result in unnecessary connection to input/output ports and waste of power.

### DISCLOSURE

### TECHNICAL PROBLEM

An object of the embodiments disclosed in this document is to provide an input/output device capable of supplying power supplied from an electronic device connected to a port to another electronic device, and a method of operating the same.

The technical problems of the embodiments disclosed in this document are not limited to the problems mentioned above, and unmentioned other technical problems will be clearly understood by those skilled in the art from the following description.

### TECHNICAL SOLUTION

An input/output device according to an embodiment disclosed in this document comprises: a plurality of input/output ports respectively connected to a plurality of electronic devices; and a processor configured to control supply of power needed for operation of the plurality of electronic devices, and the processor may control electrical connections between the plurality of input/output ports so that power provided from a first electronic device connected to a first input/output port among the plurality of input/output ports is supplied to a second electronic device connected to a second input/output port.

According to an embodiment, the input/output device may further comprise a plurality of transceivers respectively connected to the plurality of input/output ports to receive power from outside through a power line.

According to an embodiment, the plurality of input/output ports may be respectively connected to the plurality of transceivers through power supply lines and data transmission lines, and the power supply lines of the plurality of input/output ports may be electrically connected to each other.

According to an embodiment, the processor may open a switch between the first input/output port and a first transceiver connected to the first input/output port through a power supply line.

According to an embodiment, the processor may short-circuit a switch between the second input/output port and a second transceiver connected to the second input/output port through a power supply line.

According to an embodiment, the processor may short-circuit a switch between the first input/output port and the second input/output port electrically connected to the first input/output port.

According to an embodiment, the first electronic device may be a sensor that includes a power supply that stores driving power needed for operation of the first electronic device, and operates based on power provided by the power supply.

According to an embodiment, driving power needed for operation of the second electronic device may be higher than the power supplied through the power supply line.

An operation method of an input/output device according to an embodiment disclosed in this document may comprise the steps of: distinguishing a plurality of electronic devices connected to a plurality of input/output ports as a first electronic device and a second electronic device; and controlling an electrical connection relation between the plurality of input/output ports so that power provided from the first electronic device connected to a first input/output port among the plurality of input/output ports is supplied to the second electronic device connected to a second input/output port.

According to an embodiment, the first electronic device may be a sensor that includes a power supply that stores driving power needed for operation of the first electronic device, and operates based on power provided by the power supply, and the second electronic device may include a sensor in which driving power needed for operation of the second electronic device is higher than power supplied from outside through a power supply line of the input/output device.

According to an embodiment, the controlling step may include the steps of: opening a switch between the first input/output port and a first transceiver electrically connected to the first input/output port; short-circuiting a switch between the second input/output port and a second transceiver electrically connected to the second input/output port; and short-circuiting a switch of a power supply line between the first input/output port and the second input/output port.

### ADVANTAGEOUS EFFECTS

According to an embodiment disclosed in this document, an input/output device capable of supplying power supplied from an electronic device connected to a port to another electronic device and a method of operating the same are provided.

### DESCRIPTION OF DRAWINGS

FIG. 1 is a view for explaining an input/output device and a peripheral configuration according to an embodiment disclosed in this document.
FIG. 2 is a view for explaining the schematic configuration of an input/output device and the operation of the input/output device according to an embodiment disclosed in this document.
FIG. 3 is a view for explaining the operation of an input/output device according to an embodiment disclosed in this document.
FIG. 4 is a view for explaining in detail the configuration of an input/output device according to an embodiment disclosed in this document.
FIG. 5 is a flowchart for explaining the operation of an input/output device according to an embodiment disclosed in this document.
FIG. 6 is a flowchart for explaining the process of distinguishing sensors according to an embodiment disclosed in this document.

### MODE FOR INVENTION

Hereinafter, embodiments disclosed in this document will be described in detail with reference to the exemplary drawings. In assigning reference numerals to the components in each drawing, it should be noted that like numerals are given to like components as much as possible although they are shown in different drawings. In addition, in describing the embodiments disclosed in this document, when a specific description of a related known configuration or function is determined to hinder understanding of the embodiments disclosed in this document, detailed description thereof will be omitted.

In describing the components of the embodiments disclosed in this document, terms such as first, second, A, B, (a), (b), and the like may be used. These terms are intended only to distinguish the components from other components, and the nature, order, or sequence of the components are not limited by these terms. In addition, unless otherwise defined, all terms used herein, including technical or scientific terms, have the same meaning as generally understood by those skilled in the art. Terms defined in commonly used dictionaries should be interpreted as having a meaning consistent with the meaning they have in the context of related techniques, and will not be interpreted in an ideal or excessively formal sense unless explicitly defined in this application.

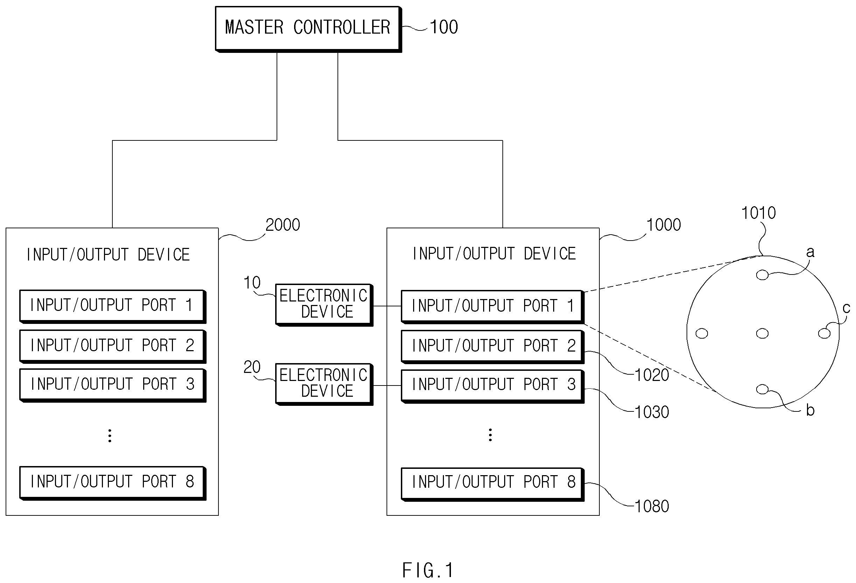

FIG. 1 is a view for explaining an input/output device and a peripheral configuration according to an embodiment disclosed in this document.

Referring to FIG. 1, a plurality of input/output devices 1000 and 2000 and a master controller 100 controlling the plurality of input/output devices 1000 and 2000 are shown.

The input/output devices 1000 and 2000 may input data or output data. The input/output devices 1000 and 2000 may be configured to store data input from the outside or process data input from the outside, and may be configured to output data stored inside to the outside.

The input/output devices 1000 and 2000 may operate in response to the control of the master controller 100. The master controller 100 may be configured to perform maintenance and management operations on the input/output devices 1000 and 2000, monitor the operation states of the input/output devices 1000 and 2000, or control the input/output devices 1000 and 2000 sequentially or non-sequentially. The master controller 100 may control the operation of various facilities or devices (not shown) connected to the master controller 100 based on various data provided by the input/output devices 1000 and 2000.

According to an embodiment, the master controller 100 may include a programmable logic controller (PLC) that controls the input/output devices 1000 and 2000 in industrial facilities, for example, production and inspection facilities that produce or inspect battery cells, battery modules, battery packs, and the like. In this case, the master controller 100 may control operations of various facilities or devices used to produce or inspect the battery cells, battery modules, battery packs, and the like based on various data provided by the input/output devices 1000 and 2000.

According to an embodiment, the input/output device 1000 may be an IO Link Master device that communicates on the basis of a digital communication protocol (IO Link) used for connecting digital sensors, actuators, or the like, but it is not limited thereto.

The input/output devices 1000 and 2000 may exchange data with the outside through a plurality of input/output ports. Although it will be described below based on the input/output device 1000 for convenience of explanation, it is not limited thereto.

The input/output device 1000 may include a plurality of input/output ports 1010 to 1080. The input/output ports 1010 to 1080 are bidirectional ports through which the input/output device 1000 may be physically connected to other electronic devices or sensors, and the input/output device 1000 may receive data, signals, and the like from other electronic devices or output data, signals, and the like to the electronic devices through the input/output ports 1010 to 1080. Referring to FIG. 1, the input/output device 1000 is illustrated as including eight input/output ports 1010 to 1080, but it is not limited thereto, and the number of input/output ports may vary according to design.

The input/output device 1000 may be connected to various electronic devices through input/output ports 1010 to 1080. The input/output device 1000 may be connected to electronic devices and unidirectionally or bidirectionally communicate with the electronic devices to exchange data or the like. According to an embodiment, the electronic devices may be analog or digital sensors, such as pressure sensors, photoelectric sensors, temperature sensors, or the like, which converts detected environmental information into electrical signals, but they are not limited thereto.

The input/output port 1010 may be connected to an electronic device through a plurality of pins. According to an embodiment, the input/output port 1010 of the input/output device 1000, which is an IO-Link Master device, is illustrated as having five pins, but it is not limited thereto, and may be variously changed, such as being configured to have three pins.

According to an embodiment, the input/output port 1010 may include five pins. Each of the pins included in the input/output port 1010 may be configured so that the pins of the electronic device are connected to different lines within the input/output device 1010.

According to an embodiment, among the pins of the input/output port 1010, a first pin 'a' and a second pin 'b' may be connected to the power supply line of the input/output device 1000, and a third pin 'c' may be connected to the data transmission line of the input/output device 1000, but they are not limited thereto. The other pins except the first pin 'a' to the third pin 'c' may be configured to be connected to various lines according to design.

According to an embodiment, the electronic device may be connected to input/output port 1 1010 to be supplied with power through the first pin 'a' and the second pin 'b'. In addition, the electronic device may be connected to input/output port 1 1010 to supply power to the input/output device 1010 through the first pin 'a' and the second pin 'b'. The power supply line connected to the second pin 'b' may be electrically connected to a ground terminal.

According to an embodiment, the electronic device may be connected to input/output port 1 1010 to provide data to the input/output device 1000 through the third pin 'c'.

For example, assuming that an electronic device is connected to input/output port 1 1010, the electronic device may receive power needed to drive the electronic device through the first pin 'a' and the second pin 'b', and provide data processed by the electronic device to the input/output device 1000 through the third pin 'c'. The input/output device 1000 may provide data provided by the electronic device to the master controller 100, and the master controller 100 may control production facilities or inspection facilities based on the data provided by the electronic device.

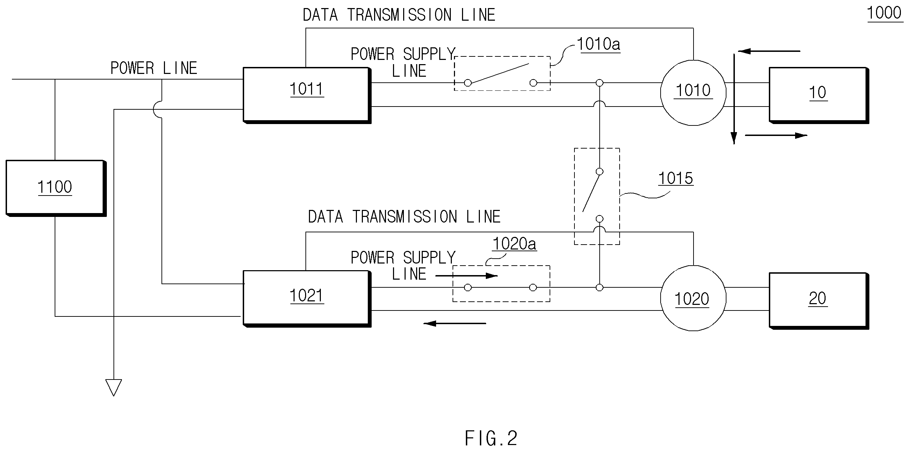

FIG. 2 is a view for explaining the schematic configuration of an input/output device and the operation of the input/output device according to an embodiment disclosed in this document.

In FIG. 2, although the input/output device 1000 is described as an example, it may be applied to the input/output device 2000 substantially the same (see FIG. 1).

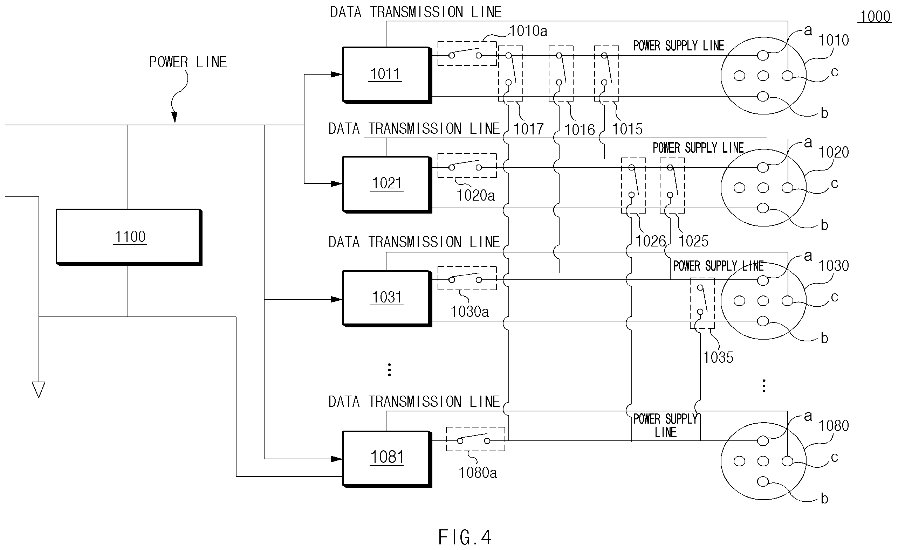

Referring to FIG. 2, the input/output device 1000 may include two input/output ports 1010 and 1020, two transceivers 1011 and 1012, switches 1010a and 1020a located on the power supply line between the input/output ports 1010 and 1020 and the transceivers 1011 and 1021 respectively connected to the input/output ports 1010 and 1020, a switch 1015 located on the power supply line electrically connecting the input/output ports 1010 and 1020, and a processor 1100 that generally controls the input/output device 1000. However, FIG. 2 shows a schematic configuration of the input/output device 1000, and more detailed information will be described below in the description of FIG. 4.

The input/output ports 1010 and 1020 may be connected to electronic devices, respectively. Each of the input/output ports 1010 and 1020 may include a plurality of input/output pins (see FIG. 1), and may connect the electronic devices and the input/output device 1000 through a plurality of lines connected to the plurality of input/output pins.

Hereinafter, it is assumed that the electronic devices connected to the input/output ports 1010 and 1020 are digital or analog sensors such as a temperature sensor, a photoelectric sensor, a pressure sensor, a humidity sensor, or the like.

The input/output ports 1010 and 1020 may be connected to the transceivers 1011 and 1021, respectively. Specifically, the input/output ports 1010 and 1020 may be electrically connected to the transceivers 1011 and 1021, respectively, through a power supply line, and may be connected to transmit or receive data with the transceivers 1011 and 1021, respectively, through a data transmission line.

The transceivers 1011 and 1021 may be connected to the outside through a power line, and may be connected to the input/output ports 1010 and 1020 through a power supply line and a data transmission line, respectively. According to an embodiment, the transceiver is a concept including a transmitter and a receiver, and may supply power supplied from the outside through a power line to the input/output ports 1010 and 1020 through the power supply line, or may receive power from the input/output ports 1010 and 1020 through the power supply line. In addition, the transceivers 1011 and 1021 may be configured to receive data provided by the sensors 10 and 20 respectively connected to the input/output ports 1010 and 1020 through the data transmission line, or transmit data to the sensors 10 and 20 respectively connected to the input/output ports 1010 and 1020.

According to an embodiment, the switches 1010a and 1020a may be located on the power supply line connected between the input/output ports 1010 and 1020 and the transceivers 1011 and 1021, respectively. Each electrical connection between the transceivers 1011 and 1021 and the input/output ports 1010 and 1020 may be determined based on the state of the switches 1010a and 1020a.

The input/output port 1010 may be electrically connected to another input/output port 1020. According to an embodiment, the input/output ports 1010 and 1020 may be connected to each other through a power supply line that connects the power supply line between the input/output port 1010 and the transceiver 1011 and the power supply line between the input/output port 1020 and the transceiver 1021. According to an embodiment, the switch 1015 that controls the electrical connection between the input/output ports 1010 and 1020 may be located on the power supply line between the input/output port 1010 and the input/output port 1020.

The processor 1100 may control the overall operation of the input/output device 1000. According to an embodiment, the processor 1100 may be configured to provide data provided by various electronic devices 10 and 20 connected to the input/output device 1000 to the master controller 100 (see FIG. 1) through the data transmission line, control the input/output device 1000 in response to a command of the master controller 100, or control the transceivers 1011 and 1021.

The processor 1100 may control supply of power needed for operation of various sensors 10 and 20 connected to the input/output device 1000.

According to an embodiment, the processor 1100 may control the switches 1010a and 1020a located on the power supply lines so that power supplied from the outside through the power line may be provided to the input/output ports 1010 and 1020 through the transceivers 1011 and 1021.

According to an embodiment, the processor 1100 may distinguish the sensors 10 and 20 connected to the input/output ports 1010 and 1020 as a first sensor and a second sensor, and control supply of power needed for operation of the first sensor and the second sensor.

According to an embodiment, the processor 1100 may determine whether the sensor 10 connected to input/output port 1 1010 is the first sensor or the second sensor based on the communication frame. In the same way, the processor 1100 may distinguish whether the sensor 20 connected to input/output port 2 1020 is the first sensor or the second sensor based on the communication frame.

According to an embodiment, the first sensor may be a sensor that includes a power supply and operates by the power supplied from the power supply, and the second sensor may be a sensor that does not include a power supply. For convenience of explanation, it is assumed that the electronic device 10 connected to input/output port 1 1010 is the first sensor, and the electronic device 20 connected to input/output port 2 1020 is the second sensor.

Since the first sensor is a sensor that includes its own power supply, the first sensor may operate even when it does not receive power supplied from the outside through a power line. However, since the second sensor is a sensor that does not include its own power supply, it may operate only when it receives power supplied from the outside through a power line.

The processor 1100 may control the switch 1010a between input/output port 1 1010 and the transceiver 1011, the switch 1020a between input/output port 2 1020 and the transceiver 1021, and the switch 1015 between input/output port 1 1010 and input/output port 2 1020 to supply power needed for operation of the sensor 10 connected to input/output port 1 1010 and the sensor 20 connected to input/output port 2 1020.

According to an embodiment, since the sensor 10 connected to input/output port 1 1010 is the first sensor, the sensor 10 may operate even when power supplied from the outside through the power line is not supplied to the sensor 10. The processor 1100 may control the switch 1010a between input/output port 1 1010 and the transceiver 1011 to be open so that the power supplied from the outside through the power line may not be supplied to the sensor 10.

According to an embodiment, a situation may occur, in which the power supply included in the sensor 10 is discharged, or driving power needed for the sensor 10 to operate increases to be higher than the power supplied from the power supply. The processor 1100 may detect, based on the communication frame, a situation in which the power supply included in the sensor 10 is unable to supply power any longer, the power of the sensor 10 is turned off, or the driving power for the sensor 10 to operate increases to be higher than the power supplied from the power supply. In this case, the processor 1100 may control the power supplied from the outside through the power line to be supplied to the sensor 10 by short-circuiting the switch 1010a between input/output port 1 1010 and the transceiver 1011 although the sensor 10 includes a power supply.

According to an embodiment, since the sensor 20 connected to input/output port 2 1020 is a second sensor, power supplied from the outside through the power line should be supplied to the sensor 20 in order for the sensor 20 to operate. The processor 1100 may control the power supplied from the outside through the power line to be supplied to the sensor 20 by short-circuiting the switch 1020a between input/output port 2 1020 and the transceiver 1021. Here, it is assumed that the sensor 20 may operate with the power supplied from the outside since the power supplied from the outside through the power line is higher than the driving power of the sensor 20. The sensor 20 may operate with the power supplied from the outside through the power line.

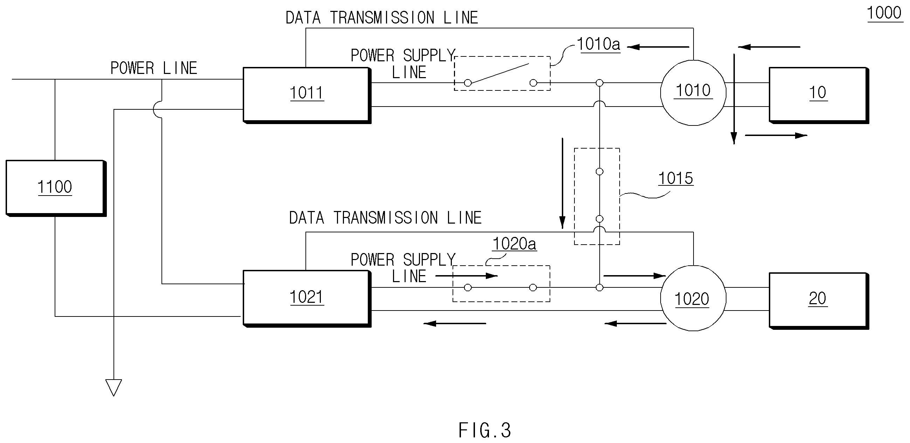

FIG. 3 is a view for explaining the operation of an input/output device according to an embodiment disclosed in this document.

As described above in the description of FIG. 2, the processor 1100 may control supply of power needed for operation of the sensor 10 and the sensor 20 connected to input/output port 1 1010 and input/output port 2 1020, respectively. The processor 1100 may distinguish whether the sensor 10 connected to input/output port 1 1010 is the first sensor or the second sensor based on the communication frame.

For convenience of explanation, it is assumed that the sensor 10 connected to input/output port 1 1010 is the first sensor, and the sensor 20 connected to input/output port 2 1020 is the second sensor.

According to an embodiment, since the sensor 10 connected to input/output port 1 1010 is the first sensor, the sensor 10 may operate even when power supplied from the outside through the power line is not supplied to the sensor 10. The processor 1100 may control the switch 1010a between input/output port 1 1010 and the transceiver 1011 to be open so that the power supplied from the outside through the power line may not be supplied to the sensor 10. In this case, the sensor 10 connected to input/output port 1 1010 operates with its own power supply, and may provide detected environmental information to the transceiver 1011 through the data transmission line.

According to an embodiment, since the sensor 20 connected to input/output port 2 1020 is a second sensor, power supplied from the outside through the power line should be supplied to the sensor 20 in order for the sensor 20 to operate. The processor 1100 may control the power supplied from the outside through the power line to be supplied to the sensor 20 by short-circuiting the switch 1020a between input/output port 2 1020 and the transceiver 1021. However, it is assumed that the sensor 20 shown in FIG. 3 may not operate with only the power supplied from the outside since the power supplied from the outside through the power line is lower than the driving power of the sensor 20, unlike the sensor 20 shown in FIG. 2.

Since this is a case in which the sensor 20 is difficult to operate with only the power supplied from the outside through the power line, additional power should be supplied to the sensor 20 in order for the sensor 20 to operate. The processor 1100 may control the electrical connection between an input/output port (not shown) not shown in FIG. 2 and the input/output port 1020 to which the sensor 20 is connected so that the power supplied from the outside through the power line may not be supplied to the sensor 20, and may control the electrical connection between input/output port 1 1010 and input/output port 2 1020 so that the power supplied by the sensor 10 may be supplied to the sensor 20.

According to an embodiment, the processor 1100 may short-circuit the switch 1015 between input/output port 1 1010 and input/output port 2 1020. The power supplied by the sensor 10 may be supplied from the input/output port 1010 to the sensor 20 through the switch 1015 and the input/output port 1020. The sensor 20 may operate based on the power supplied from the outside through the power line and the power supplied from the power supply of the sensor 10.

The sensors 10 and 20 may be connected to the input/output ports 1010 and 1020 to convert various environmental information into data and provide the data to the input/output device 1000. For example, when the sensors 10 and 20 are temperature sensors, the sensors 10 and 20 may convert environmental information including detected temperature and changes in the temperature into data and provide the data to the input/output device 1000, and when the sensors 10 and 20 are pressure sensors, the sensors 10 and 20 may convert environmental information including detected pressure and changes in the pressure into data and provide the data to the input/output device 1000.

However, the sensors 10 and 20 may need a driving power to operate. When the sensors 10 and 20 includes a power supply, the sensors 10 and 20 may operate based on the power supplied from the power supply, but when the sensors 10 and 20 do not include a power supply, power should be supplied to the sensors 10 and 20 in order for the sensors 10 and 20 to operate. The processor 1100 may distinguish the sensors 10 and 20 connected to the input/output device 1000 as a first sensor and a second sensor according to whether the sensors 10 and 20 include a power supply as described above.

When the power supplied from the input/output device 1000 is insufficient to drive the sensors, additional supply of power is needed for the sensors to operate. When power is supplied by connecting an additional input/output port to the sensors in addition to the input/output ports connected to the sensors to make up for the insufficient power of the sensors, a problem of causing unnecessary waste of input/output ports and using excessive power may arise. According to an embodiment disclosed in the present document, the processor 1100 may control the electrical connection relation between the input/output ports so that power supplied by the first sensor including a power supply may be supplied to the second sensor that needs additional supply of power. The processor 1100 may prevent unnecessary waste of input/output ports by supplying the power supplied by the first sensor to the second sensor.

FIG. 4 is a view for explaining in detail the configuration of an input/output device according to an embodiment disclosed in this document.

Referring to FIG. 4, the connection relation between input/output ports 1030 and 1080, transceivers 1031 and 1081, and a plurality of input/output ports 1010 to 1080 not shown in FIGS. 2 to 3 is shown.

Each of the plurality of input/output ports 1010 to 1080 may be electrically connected. According to an embodiment, the power supply line between the input/output port 1010 and the transceiver 1011 may be electrically connected to the power supply line between the input/output port 1020 and the transceiver 1021, the power supply line between the input/output port 1030 and the transceiver 1031, and/or the power supply line between the input/output port 1080 and the transceiver 1081.

In the same way, the power supply line between the input/output port 1020 and the transceiver 1021 may be electrically connected to the power supply line between the input/output port 1030 and the transceiver 1031 and/or the power supply line between the input/output port 1080 and the transceiver 1081.

In the same way, the power supply line between the input/output port 1030 and the transceiver 1031 may be electrically connected to the power supply line between the input/output port 1080 and the transceiver 1081.

According to an embodiment, the power supply lines between the plurality of input/output ports 1010 to 1080 and the plurality of transceivers 1011 to 1081 may include the switches 1010a to 1080a that control connections between the plurality of input/output ports 1010 to 1080 and the plurality of transceivers 1011 to 1081. For example, the switch 1010a may be located on the power supply line between the input/output port 1010 and the transceiver 1011, the switch 1020a may be located on the power supply line between the input/output port 1020 and the transceiver 1021, the switch 1030a may be located on the power supply line between the input/output port 1030 and the transceiver 1031, and the switch 1080a may be located on the power supply line between the input/output port 1080 and the transceiver 1081.

According to an embodiment, the power supply lines connected between the plurality of input/output ports 1010 to 1080 may include switches 1015, 1016, 1017, 1025, 1026, and 1035 that control electrical connections between the plurality of input/output ports 1010 to 1080. For example, the switch 1015 may be located on the power supply line between the input/output port 1010 and the input/output port 1020, the switch 1016 may be located on the power supply line between the input/output port 1010 and the input/output port 1030, and the switch 1017 may be located on the power supply line between the input/output port 1010 and the input/output port 1080.

In the same way, the switch 1025 may be located on the power supply line between the input/output port 1020 and the input/output port 1030, the switch 1026 may be located on the power supply line between the input/output port 1020 and the input/output port 1080, and the switch 1035 may be located on the power supply line between the input/output port 1030 and the input/output port 1080.

In addition, input/output ports 1040 to 1070 not shown in FIG. 4 may also be electrically connected in the same manner as described above.

According to an embodiment, the switches 1010a to 1080a that control connections between the plurality of input/output ports 1010 to 1080 and the plurality of transceivers 1011 to 1081 may be located between the power supply lines electrically connecting the plurality of input/output ports 1010 to 1080 and the plurality of transceivers 1011 to 1081.

The power line may be a line that provides power needed for operation of the input/output device 1000 from the outside. For example, power supplied from the outside may be supplied to the processor 1100 and the plurality of transceivers 1011 to 1081 connected to the power line.

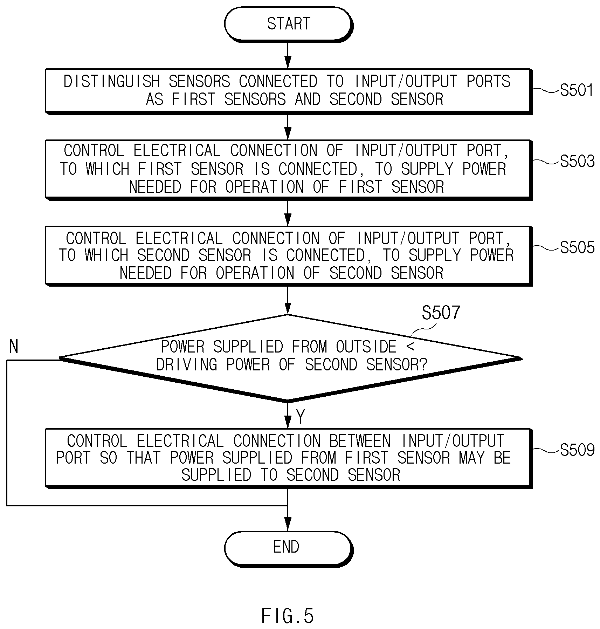

FIG. 5 is a flowchart for explaining the operation of an input/output device according to an embodiment disclosed in this document.

Referring to FIG. 5, at step S501, the input/output device 1000 (see FIG. 1) may distinguish the sensors connected to the plurality of input/output ports 1010 to 1080 (see FIG. 1) as a first sensor and a second sensor.

According to an embodiment, the input/output device 1000 may distinguish a sensor including a power supply as a first sensor and a sensor not including a power supply as a second sensor.

According to an embodiment, the input/output device may confirm information such as whether power may be supplied to the input/output device 1000 through the power supply included in the first sensor, based on a bit at a preset position of the communication frame.

According to an embodiment, the second sensor may include two types of sensors. For example, the second sensor may include a sensor that is sufficient to operate with power supplied from the input/output device 1000 since the power supplied from the outside through the power line of the input/output device 1000 is higher than the driving power needed for the sensor to operate, and a sensor that needs power in addition to the power supplied from the input/output device 1000 since the power supplied from the outside through the power line of the input/output device 1000 is lower than the driving power needed for the sensor to operate.

At step S503, the input/output device 1000 may control the electrical connection of the input/output port, to which the first sensor is connected, to supply power needed for the operation of the first sensor.

According to an embodiment, although power is not supplied from the outside through the power line of the input/output device 1000, the first sensor may operate based on the power supplied from the power supply. The input/output device 1000 may open the switch between the first input/output port to which the first sensor is connected and the first transceiver electrically connected to the first input/output port. Power supplied from the outside through the power line of the input/output device 1000 will not be supplied to the first sensor.

At step S505, the input/output device 1000 may control the electrical connection of the input/output port, to which the second sensor is connected, to supply power needed for the operation of the second sensor.

According to an embodiment, in order for the second sensor to operate, power should be supplied from the outside through the power line of the input/output device 1000. The input/output device 1000 may short-circuit the switch between the second input/output port to which the second sensor is connected and the second transceiver electrically connected to the second input/output port. Power supplied from the outside through the power line of the input/output device 1000 may be supplied to the second sensor.

At step S507, the input/output device 1000 may confirm whether the power supplied from the outside through the power supply line of the input/output device 1000 is lower than the driving power of the second sensor.

According to an embodiment, when the power supplied from the outside through the power supply line of the input/output device 1000 is higher than the driving power of the second sensor (N), additional supply of power may not be needed for the second sensor.

According to an embodiment, when the power supplied from the outside through the power supply line of the input/output device 1000 is lower than the driving power of the second sensor (Y), the second sensor may operate only when additional power is supplied to the second sensor. In order to supply the additional power to the second sensor, the input/output device 1000 may control the electrical connection between the first input/output port and the second input/output port so that the power supplied from the first sensor may be supplied to the second sensor.

According to an embodiment, the input/output device 1000 may short-circuit the switch between the first input/output port and the second input/output port connected through the power supply line. The second sensor may operate based on the power supplied from the first sensor and the power supplied from the outside through the power line.

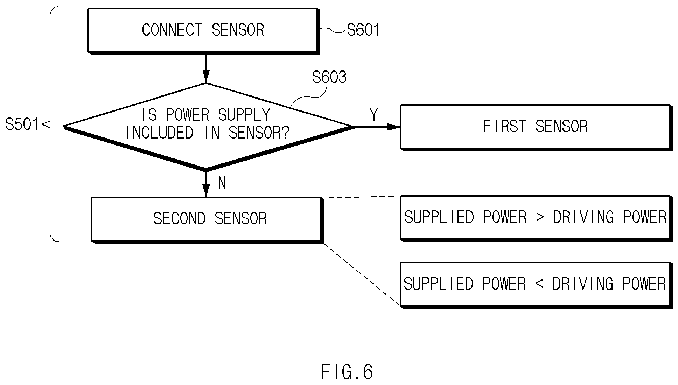

FIG. 6 is a flowchart for explaining the process of distinguishing sensors according to an embodiment disclosed in this document.

Referring to FIG. 6, at step S501, a detailed process of distinguishing a sensor as a first sensor or a second sensor by the input/output device 1000 (see FIG. 4) is shown.

When a sensor is connected (S601), the input/output device 1000 may confirm whether the sensor includes a power supply (S603). The input/output device 1000 may distinguish a sensor including a power supply as a first sensor (Y), and a sensor not including a power supply as a second sensor (N). According to an embodiment, the input/output device 1000 may confirm whether the sensor includes a power supply based on a communication frame. According to an embodiment, the input/output device 1000 may confirm information such as whether the sensor includes a power supply and may supply power to the input/output device 1000 through the power supply based on a bit at a preset position of the communication frame.

According to an embodiment, since the first sensor includes a power supply, even when it is connected to the input/output device 1000, a separate supply of power from the input/output device 1000 may not be needed. Since the second sensor does not include a power supply, it may need supply of power from the input/output device 1000 to operate in connection with the input/output device 1000.

According to an embodiment, the driving power needed for each sensor to operate may vary according to the type of information detected, the operation method, the sensitivity, or the like. Since the power supplied to the sensor through the input/output device 1000 is power supplied from the outside through the power line, the magnitude of the power supplied to the sensor may be limited. Accordingly, the second sensor may include two types of sensors. For example, the second sensor may include a sensor that is sufficient to operate with power supplied from the input/output device 1000 since the power supplied from the outside through the power line of the input/output device 1000 is higher than the driving power needed for the sensor to operate, and a sensor that needs power in addition to the power supplied from the input/output device 1000 since the power supplied from the outside through the power line of the input/output device 1000 is lower than the driving power needed for the sensor to operate.

As described above, although all the components constituting the embodiments have been described as being combined as one piece or operating in combination, they are not necessarily limited to such embodiments, and within the scope of the objects, all the components may be selectively combined into one or more to operate. In addition, since the terms "include", "configure", "have", and the like described above mean that corresponding components may be included unless specifically stated otherwise, it should be interpreted as including other components rather than excluding the components.

The above explanation only describes the technical spirit disclosed in this document as an example, and those skilled in the art may make various changes and modifications without departing from the essential characteristics of the embodiments disclosed in this document.

Therefore, the embodiments disclosed in this document are not intended to limit but to explain the technical spirit disclosed in this document, and the scope of the technical spirit disclosed in this document is not limited by these embodiments. The protection scope of the technical spirit disclosed in this document should be interpreted by the claims provided below, and all technical spirits within the equivalent scope should be interpreted as being included in the scope of this document.

### Descriptions of symbols

100: Master controller
1000, 2000: Input/output device
1010, 1020, 1030, 1080: Input/output port
1011, 1021, 1031, 1081: Transceiver
1010a, 1020a, 1015: Switches

## Claims

1. An input/output device comprising:
a plurality of input/output ports respectively connected to a plurality of electronic devices; and
a processor configured to control supply of power needed for operation of the plurality of electronic devices, wherein
the processor controls electrical connections between the plurality of input/output ports so that power provided from a first electronic device connected to a first input/output port among the plurality of input/output ports is supplied to a second electronic device connected to a second input/output port.

2. The input/output device according to claim 1, further comprising a plurality of transceivers respectively connected to the plurality of input/output ports to receive power from outside through a power line.

3. The input/output device according to claim 2, wherein the plurality of input/output ports is respectively connected to the plurality of transceivers through power supply lines and data transmission lines, and the power supply lines of the plurality of input/output ports are electrically connected to each other.

4. The input/output device according to claim 3, wherein the processor opens a switch between the first input/output port and a first transceiver connected to the first input/output port through a power supply line.

5. The input/output device according to claim 3, wherein the processor short-circuits a switch between the second input/output port and a second transceiver connected to the second input/output port through a power supply line.

6. The input/output device according to claim 4, wherein the processor short-circuits a switch between the first input/output port and the second input/output port electrically connected to the first input/output port.

7. The input/output device according to claim 1, wherein the first electronic device is a sensor that includes a power supply that stores driving power needed for operation of the first electronic device, and operates based on power provided by the power supply.

8. The input/output device according to claim 2, wherein driving power needed for operation of the second electronic device is higher than the power supplied through the power supply line.

9. An operation method of an input/output device, the method comprising the steps of:
distinguishing a plurality of electronic devices connected to a plurality of input/output ports as a first electronic device and a second electronic device; and
controlling an electrical connection relation between the plurality of input/output ports so that power provided from the first electronic device connected to a first input/output port among the plurality of input/output ports is supplied to the second electronic device connected to a second input/output port.

10. The operation method according to claim 9, wherein the first electronic device is a sensor that includes a power supply that stores driving power needed for operation of the first electronic device, and operates based on power provided by the power supply, and the second electronic device includes a sensor in which driving power needed for operation of the second electronic device is higher than power supplied from outside through a power supply line of the input/output device.

11. The operation method according to claim 9, wherein the controlling step includes the steps of:
opening a switch between the first input/output port and a first transceiver electrically connected to the first input/output port;
short-circuiting a switch between the second input/output port and a second transceiver electrically connected to the second input/output port; and
short-circuiting a switch of a power supply line between the first input/output port and the second input/output port.
